(19) **Europäisches Patentamt**

**European Patent Office**

**Office européen des brevets**

(11) **EP 0 569 765 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int. Cl.$^6$: **B22F 9/12**

(21) Anmeldenummer: **93106732.6**

(22) Anmeldetag: **26.04.1993**

(54) **Vorrichtung zur Herstellung von feinteiliger Metall- und Keramikpulver**

Apparatus for manufacturing fine metal and ceramic powder

Appareillage pour la fabrication de poudres fines en métal ou en céramique

(84) Benannte Vertragsstaaten:
**CH DE DK LI SE**

(30) Priorität: **04.05.1992 DE 4214720**

(43) Veröffentlichungstag der Anmeldung:
**18.11.1993 Patentblatt 1993/46**

(73) Patentinhaber: **H.C. Starck GmbH & Co. KG**
**D-38642 Goslar (DE)**

(72) Erfinder:
- **König, Theo, Dr.**
  **W-7887 Laufenburg-Rotzel (DE)**
- **Bächle, Kurt**
  **W-7886 Murg (DE)**
- **Stein, Falk**
  **W-7886 Murg-Oberhof (DE)**

- **Ewel, Horst**
  **W-7886 Murg (DE)**
- **Rose, Volker**
  **W-7887 Laufenburg (DE)**
- **Zippenfenig, Gerd**
  **W-7886 Murg (DE)**
- **Klafki, Roland**
  **W-7861 Grafenhausen (DE)**

(74) Vertreter: **Steiling, Lothar, Dr. et al**
**Bayer AG**
**Konzernzentrale RP**
**Patente Konzern**
**51368 Leverkusen (DE)**

(56) Entgegenhaltungen:
**US-A- 4 383 852**      **US-A- 4 484 943**
**US-A- 4 556 416**      **US-A- 4 994 107**
**US-A- 5 073 193**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft einen Gasphasenreaktor zur Herstellung feinteiliger Metall- und/oder Keramikpulver, bestehend aus einer Gasvorwärmeinrichtung, einem Gaseintragsteil, einem Strömungsformteil, einem Reaktionsrohr und einer Produktaustragsvorrichtung.

Für die mechanischen Eigenschaften von pulvermetallurgisch oder pulverkeramisch hergestellten Bauteilen sind die Eigenschaften der Ausgangspulver von entscheidender Bedeutung. Insbesondere eine enge Teilchengrößenverteilung, hohe Pulverreinheit und fehlende Grobkornanteile bzw. Agglomerate wirken sich positiv auf die Eigenschaften entsprechender Bauteile aus.

Zur technischen Herstellung von feinen Metall- und Keramikpulvern sind zahlreiche Vorrichtungen und Verfahren bekannt geworden.

Neben den rein mechanischen Zerkleinerungs- und Klassierverfahren, die den Nachteil haben, daß nur Pulver bis zu einer bestimmten Feinheit und mit relativ breiter Kornverteilung herstellbar sind, wurden auch eine Vielzahl von Verfahren und Vorrichtungen zur Abscheidung aus der Gasphase vorgeschlagen.

Durch zum Teil sehr kleine Energiequellen, wie z.B. thermisches Plasma oder Laserstrahl, oder bei turbulenten Flammen, wie z.B. einem Chlorknallgasbrenner, ist die Kornverteilung und Korngröße der hergestellten Pulver nicht exakt steuerbar, und üblicherweise führen die Reaktionsbedingungen zu einer breiten Kornverteilung sowie zum Auftreten von Einzelteilchen, deren Durchmesser ein Vielfaches der Durchschnittskorngröße beträgt.

Nach dem derzeit bekannt gewordenen großtechnischen Pulverherstellungsverfahren ist es kaum oder nur sehr schwer möglich, Pulver mit Durchschnittskorngrößen von < 0,5 µm, gemessen nach FSSS (und nicht Einselteilchengröße), herzustellen. Bei diesen konventionell hergestellten feinen Pulvern läßt es sich praktisch nicht ausschließen, daß ein gewisser Prozentsatz an Grobkorn im Material enthalten ist, der sich schädlich auf die mechanischen Eigenschaften daraus hergestellter Bauteile auswirkt. Auch erhält man bei herkömmlichen Mahlverfahren eine sehr breite Kornverteilung, die bei diesen Pulvern auch nicht durch Sichtschritte wesentlich eingeengt werden kann.

Bisher bekannt gewordene Verfahren und Vorrichtungen zur Herstellung von Feinstpulvern über die Gasphase arbeiten zum Teil zweistufig, wobei die zweite Stufe dazu dient, das mehr oder weniger amorphe Zwischenprodukt in kristalline Form überzuführen und unerwünschte Nebenprodukte aus der Reaktion abzutrennen.

Andere Gasphasenverfahren arbeiten nicht mit einem strömungstechnisch optimierten Heißwandreaktor, sondern verwenden zur Umsetzung eine Plasmaflamme oder andere Energieträger wie Laserstrahlen. Nachteile dieser Verfahren und Vorrichtungen sind im wesentlichen die in der Praxis nicht kontrollierbaren Reaktionsbedingungen in verschiedenen Bereichen der Reaktionszone mit sehr großen Temperaturgradienten und/oder turbulenten Strömungen. Dadurch entstehen Pulver mit breiter Kornverteilung.

Es sind zahlreiche Vorschläge für Verfahren und Vorrichtungen zur Herstellung von Feinsthartstoffpulvern und feinsten Metallpulvern gemacht worden, die aber alle mit Nachteilen behaftet sind. So weist auch das in der US-A 4.994.107 offenbarte Verfahren, in dem ein Rohrreaktor zur Herstellung gleichmäßiger, nicht agglomerierter Pulver beschrieben wird, erhebliche Nachteile für die Praxis auf. Wegen der Mischung aller Reaktionspartner vor der heißen Zone findet kein definierter Beginn der Keimbildungsreaktion statt. Auch können Wandreaktionen nicht verhindert werden. Dadurch erhöht sich die Gefahr, daß große Teilchen in das sonst feine Pulver gelangen und nicht mehr entfernt werden können.

Die EP-A 0 379 910 beschreibt ein Zweistufenverfahren zur Herstellung von $Si_3N_4$ aus der Gasphase, bei dem das Ausgangshalogenid flüssig über eine Zweistoffdüse in den Reaktorraum eingeblasen wird. Auch nach diesem Verfahren ist die Bereitstellung eines befriedigenden Pulvers nicht möglich.

Andere Vorschläge zur Herstellung von sehr feinen gleichmäßigen Pulvern sind die Umsetzung in Unterdruck, aber auch verschiedene Sol-Gel-Verfahren. Auch diese Vorschläge weisen Nachteile, wie Mehrstufigkeit, schlechte Steuerbarkeit der Korngröße, Kornverteilung und Chargenbetrieb, auf.

Auch die vorgeschlagenen Plasma-, Laser- oder Explosionsverfahren (EP-A 0 152 957, EP-A 0 151 490) weisen die genannten Nachteile auf.

Ein weiterer Vorschlag (EP-A 0 290 177) befaßt sich mit der Carbonylzersetzung zur Herstellung feiner metallischer Pulver.

Auch die Herstellung von feinen Pulvern durch speziell geführte magnesiothermische Umsetzung der entsprechenden Metallchloride zur Herstellung von z.B. TiN oder TiC erreicht nicht die Feinheit und Gleichmäßigkeit der nach dem vorgeschlagenen Verfahren hergestellten Pulver (G.W. Elger, Met. Transactions 20 B, 8, 1989, S. 493-497).

Ebenso entsprechen die in US-A 4 642 207, US-A 4 689 075, EP-A 152 957 und EP-A 151 490 offenbarten Verfahren und Vorrichtungen, die das Verdampfen von Metall durch Lichtbogen- oder Elektronenstrahl sowie Reaktion gasförmiger Reaktionspartner in einer Glimmentladung betreffen, nicht den Anforderungen an ein unter wirtschaftlichen Gesichtspunkten zu betreibendes Verfahren zur Herstellung von sehr gleichmäßigen und sehr feinen Pulvern.

Aufgabe dieser Erfindung ist somit die Bereitstellung einer Vorrichtung zur Herstellung feinteiliger Metall- und Keramikpulver, welche die beschriebenen Nachteile der Vorrichtungen des Standes der Technik nicht aufweist.

Es wurde nun eine Vorrichtung gefunden, welche diese Forderungen erfüllt. Diese Vorrichtung ist Gegenstand dieser Erfindung.

Es handelt sich hierbei um einen Gasphasenreaktor zur Herstellung feinteiliger Metall- und/oder Keramikpulver, bestehend aus einer Gasvorwärmeinrichtung (23), einem Gaseintragsteil (24), einem Strömungsformteil (25), einem Reaktionsrohr (4) und einer Produktaustragsvorrichtung (26), wobei die Gasvorwärmeinrichtung aus mindestens zwei getrennten Gaserhitzern (20) besteht und das Strömungsformteil (25) aus mindestens einer Düse (5) besteht, die mindestens zwei koaxiale, laminare und rotationssymmetrische Stromfäden formt.

In dem erfindungsgemäßen Gasphasenreaktor können feinteilige Metall- und/oder Keramikpulver durch Reaktion entsprechender Metallverbindungen und entsprechender Reaktionspartner zur Reaktion gebracht werden, wobei die Metallverbindungen und die Reaktionspartner in den erfindungsgemäßen Gaserhitzern getrennt voneinander mindestens bei Reaktionstemperatur in den Reaktor eingebracht werden können. Hierdurch läßt sich der Ort der Keimbildung eingrenzen.

Geeignete Metallverbindungen im Sinne dieser Erfindung sind insbesondere eine oder mehrere aus der Gruppe $BCl_3$, Borsäureester, Borane, $SiCl_4$, andere Chlorsilane, Silane, Metallhalogenide, teilweise hydrierte Metallhalogenide, Metallhydride, Metallalkoholate, Metallalkyle, Metallamide, Metallazide, Metallboranate und Metallcarbonyle.

Geeignete weitere Reaktionspartner sind insbesondere einer oder mehrere aus der Gruppe $H_2$, $NH_3$, Hydrazin, Amine, $CH_4$, andere Alkane, Alkene, Alkine, Aryle, $O_2$, Luft, $BCl_3$, Borsäureester, Borane, $SiCl_4$, andere Chlorsilane und Silane.

In einer bevorzugten Ausführungsform der erfindungsgemäßen Vorrichtung ist einem oder mehreren der Gaserhitzer ein Verdampfer vorgeschaltet. Besonders bevorzugt sind der oder die Verdampfer in die Gasvorwärmeinrichtung integriert. Auf diese Weise kann auf außerhalb des Reaktors befindliche Zuleitungsrohre verzichtet werden, wodurch Korrosionsprobleme und damit auch Verunreinigungsprobleme vermieden werden können. Auch ist so eine exaktere Temperaturführung möglich.

Dadurch können auch die gleichen Wirkstoffe zum Einsatz kommen wie beim Reaktor selbst. Auf den sonst nötigen Einsatz von Metallen für die Zuführungsleitungen kann verzichtet werden. Hierdurch kann eine mögliche Verunreinigungsquelle ausgeschaltet werden. Auch können somit Verdampfungstemperaturen realisiert werden, die über die Auslegungstemperaturen metallischer Werkstoffe hinausgehen. Dadurch wird die Herstellung feinteiliger Metall- und Keramikpulver, z.B. auf der Basis Eisen, Chrom, Nickel, Kobalt, möglich.

Bevorzugt besteht das erfindungsgemäße Strömungsformteil aus mindestens zwei Reaktionsgas-Düsen, die besonders bevorzugt koaxial angeordnet sind.

Auf diese Weise können die Metallverbindungen und die Reaktionspartner als koaxiale laminare Teilströme in den Reaktor eingebracht werden.

Die laminare Strömung im Reaktor stellt eine enge Verweilzeitverteilung der Keime bzw. der Partikel sicher. Auf diese Weise läßt sich eine sehr enge Korngrößenverteilung erreichen. Um Anwachsungen an den Reaktionsgas-Düsen zu verhindern, können die Reaktionspartner durch einen Inertgasstrom getrennt werden.

Eine weitere vorteilhafte Ausführungsform der erfindungsgemäßen Vorrichtung besteht also darin, daß zwischen den Reaktions-Düsen mindestens eine Inertgas-Düse angeordnet ist. Diese sind bevorzugt koaxial zu den Reaktionsgas-Düsen angebracht.

Um jedoch die Durchmischung der beiden koaxialen Teilströme sicherzustellen, kann durch Einbau eines Störkörpers in der sonst streng laminaren Strömung eine in Intensität und Aufweitung definierte Karman'sche Wirbelstraße erzeugt werden.

Eine bevorzugte Ausführungsform der erfindungsgemäßen Vorrichtung besteht also darin, daß in dem Strömungsformteil ein Störkörper zur Erzeugung einer Karman'schen Wirbelstraße angeordnet ist, bevorzugt in der Längsachse der mittleren der koaxialen Düsen.

Um die energetisch stark bevorzugte Abscheidung der Reaktionsteilnehmer an der Reaktorwand zu verhindern, wird bevorzugt das Reaktionsmedium von der Reaktorwand über Gaseintragseinrichtungen durch eine Inertgasschicht abgeschirmt.

Die Abschirmung der Reaktorwand mit Inertgas gelingt um so besser, je weiter sich die Bildung von Mikrowirbeln, die sich an der Reaktorwand zwangsläufig bilden, begrenzen lassen. Zusätzlich zu einer möglichst geringen Rauhtiefe lassen sich (wie im Flugzeugbau) Mikro-Längsrillen zur Wirbelunterdrückung einsetzen.

In einer bevorzugten Ausführungsform sind also bei der erfindungsgemäßen Vorrichtung im Reaktionsrohr eine oder mehrere Gaseintragseinrichtungen angebracht, wobei es sich besonders bevorzugt um Ringspalte handelt.

Über die speziell geformten Ringspalten kann somit in der Reaktorwand ein Inertgasstrom eingebracht werden, der über den Coandaeffekt an der Reaktorwand anliegt. Die im Reaktor durch eine homogene Abscheidung aus der Gasphase bei typischen Verweilzeiten zwischen 10 und 300 msec entstandenen Metall- oder Keramikpulverpartikel verlassen diesen gemeinsam mit den gasförmigen Reaktionsprodukten (z.B. HCl), den nicht umgesetzten Reaktanten und den Inertgasen, die als Trägergas, Spülgas und zum Zwecke der Verminderung der HCl-Adsorption eingeblasen werden. In der erfindungsgemäßen Vorrichtung sind Ausbeuten, bezogen auf die Metallkomponente, von bis zu 100 % erzielbar.

Vorzugsweise kann dann die Abtrennung der Metall- oder Keramikpulver bei Temperaturen oberhalb der Siede- bzw. Sublimationstemperaturen der eingesetzten Metallverbindungen, Reaktionspartner und/oder während der Reaktion gebildeten Zwangsanfallsprodukte vorgenommen. Die Abtrennung kann dabei vorteilhaft in einem Rückblasfilter vorgenommen werden. Wenn dieser bei hohen Temperaturen von z.B. 600°C betrieben wird, kann die Adsorption der Gase, insbesondere der nicht inerten Gase wie HCl, $NH_3$, $TiCl_4$ usw., an der sehr großen Oberfläche der Keramik- oder Metallpulver gering gehalten werden. Insbesondere wird bei der Herstellung von Nitriden die Bildung von $NH_4Cl$ verhindert (größer als 350°C).

Die noch verbliebenen, an der Pulveroberflächen adsorbierten störenden Substanzen können in einem nachgeschalteten Vakuumbehälter weiter entfernt werden, vorzugsweise wieder bei Temperaturen von ca. 600°C. Die fertigen Pulver sollten dann unter Luftausschluß aus der Anlage ausgetragen werden.

In der erfindungsgemäßen Vorrichtung können nano- oder mikrodisperse (kristallin oder amorph) Metall- und/oder Keramikpulver hergestellt werden, wobei bevorzugte Metall- und/oder Keramikpulver, Carbide, Nitride, Boride, Silizide, Phosphite, Sulfide, Oxide und/oder Kombinationen daraus der Elemente B, Al, Si, Ti, Zr, Hf, V, Nb, Ta, Cr, Mo, W, La, Y, Fe, Co, Ni oder diese Elemente alleine oder in Kombination miteinander sind.

Es ist möglich, in der erfindungsgemäßen Vorrichtung Metall- und Keramikpulver mit einer einstellbaren Partikelgröße zwischen 3 und 3.000 nm (3 µm) herzustellen, die eine extrem enge Teilchengrößenverteilung aufweisen. Charakteristisch für die so hergestellten Teilchen ist das vollständige Fehlen von Partikeln, die wesentlich größer als die Durchschnittskorngröße sind. So weisen die in der erfindungsgemäßen Vorrichtung hergestellten Pulver im allgemeinen weniger als 1 % Einzelpartikel auf, die mehr als 20 % von der mittleren Korngröße abweichen. Teilchen, die mehr als 50 % abweichen, sind nicht vorhanden.

Die nichtoxidischen Pulver weisen äußerst geringe Sauerstoffgehalte (kleiner 1000 ppm) auf. Weitere Charakteristika der Pulver sind ihre hohe Reinheit, hohe Oberflächenreinheit und gute Reproduzierbarkeit.

Je nach Korngröße und Stoff können die nichtoxidischen Pulver sehr luftempfindlich bis pyrophor sein. Um diese Eigenschaft zu beseitigen, können diese Pulver in defenierter Weise durch Beaufschlagen mit Gas/Dampfgemischen oberflächenmodifiziert werden.

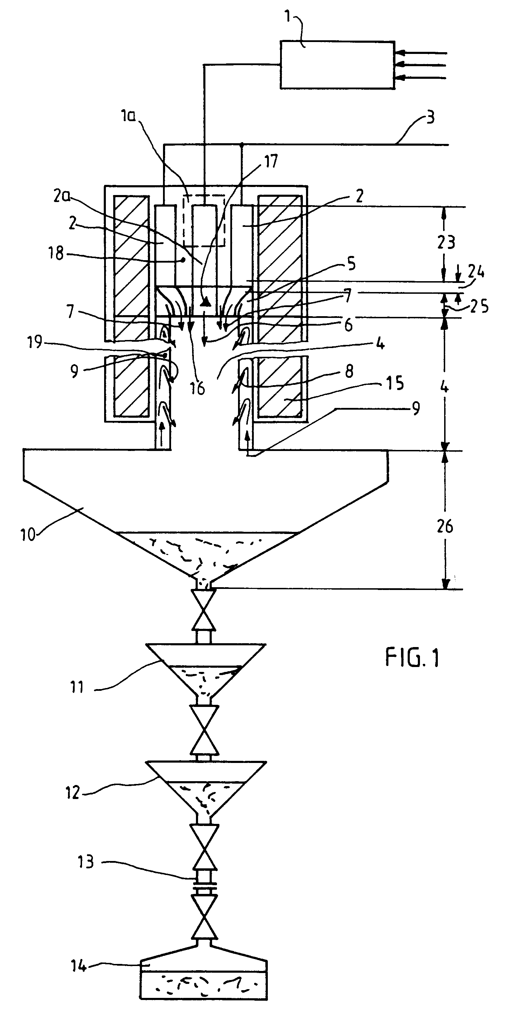

Fig. 1 ist die schematische Darstellung einer möglichen Ausführungsform der erfindungsgemäßen Vorrichtung, anhand der im folgenden die erfindungsgemäße Vorrichtung erläutert wird. Die dabei explizit genannten Verfahrens-, Stoff-und/oder Vorrichtungsparameter stellen dabei nur ausgewählte Möglichkeiten von vielen dar und schränken somit die Erfindung nicht ein.

Die festen, flüssigen oder gasförmigen Metallverbindungen werden in einen außerhalb angebrachten Verdampfer (1) oder einen innerhalb des Hochtemperaturofens angebrachten Verdampfer (1a) dosiert, dort bei Temperaturen von 200°C bis 2000°C verdampft und mit einem inerten Trägergas ($N_2$, Ar oder He) in den Gasvorerhitzer (2a) transportiert. Innerhalb des Hochtemperaturofens können höhere Verdampfungstemperaturen erzielt werden. Durch die Möglichkeit, bessere Werkstoffe einsetzen zu können, ergibt sich ein geringeres Verunreinigungsniveau der Produkte. Die weiteren Reaktionspartner (3) wie $H_2$, $NH_3$ und $CH_4$, oder für die Herstellung von Metalloxiden Luft und/oder Sauerstoff, werden ebenfalls in einem Gasvorwärmer (2) erhitzt. Beide Gasmischungen sind so gewählt, daß während des Aufheizens keine Reaktion auftritt, die zu festen Reaktionsprodukten führt. Vor Eintritt in den Rohrreaktor (4) werden die aus den Gasvorwärmern (2) austretenden turbulenten Einzelstromfäden in einer Düse (5) zu zwei koaxialen, laminaren und rotationssysmmetrischen Stromfäden geformt. Im Rohrreaktor (4) durchmischen sich der mittlere Stromfaden (6), der die Metallkomponente enthält, und der umhüllende Stromfaden (7), der die restlichen Reaktionspartner enthält, unter definierten Bedingungen. Dabei tritt die Reaktion bei Temperaturen zwischen 500°C und 2000°C z.B. gemäß folgenden Fallbeispielen ein:

$$TiCl_4 + NH_3 + 1/2\ H_2 \rightarrow TiN + 4\ HCl\ \text{oder}$$

$$TiCl_4 + CH_4 \rightarrow TiC + 4\ HCl\ \text{oder}$$

$$AlCl_3 + NH_3 \rightarrow AlN + 3\ HCl\ \text{oder}$$

$$TiCl_4 + 2BCl_3 + 5H_2 \rightarrow TiB_2 + 10\ HCl\ \text{oder}$$

$$TaCl_5 + CH_4 + 1/2\ H_2 \rightarrow TaC + 5\ HCl\ \text{oder}$$

$$4BCl_3 + CH_4 + 4H_2 \rightarrow B_4C + 12\ HCl\ \text{oder}$$

$$WCl_6 + + 3H_2 \rightarrow W + 6\ HCl\ \text{oder}$$

$$MoCl_5 + 2SiCl_4 + 6\ 1/2\ H_2 \rightarrow MoSi_2 + 13\ HCl\ \text{oder}$$

$$2NbCl_5 + 2\ 1/2\ O_2 \rightarrow Nb_2O_5 + 5\ Cl_2\ \text{oder}$$

$$3SiH_4 + 4NH_3 \rightarrow Si_3N_4 + 12\ H_2\ \text{oder}$$

$$ZrCl_4 + 2O_2 \rightarrow ZrO_2 + 2\ Cl_2\ \text{oder}$$

$$NiCl_2 + H_2 \rightarrow Ni + 2\ HCl$$

Um die Durchmischung der beiden koaxialen Stromfäden sicherzustellen, kann durch Einbau eines Störkörpers (17) in der ansonsten streng laminaren Strömung eine Karman'sche Wirbelstraße erzeugt werden. Die beiden koaxialen Stromfäden werden am Düsenaustritt durch einen schwachen Inertgasstrom (16) getrennt, um Anwachsungen an der Düse (5) zu verhindern.

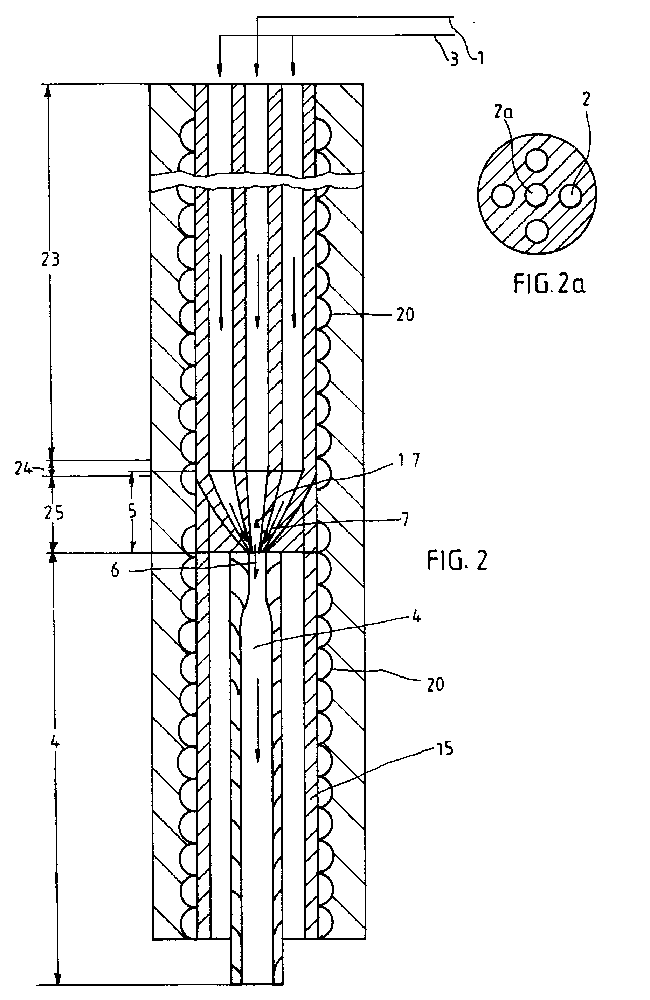

Fig. 2 verdeutlicht den Bereich der erfindungsgemäßen Vorrichtung, beginnend mit der Gasvorwärmeinrichtung (23), dem Gaseintragteil (24), dem Strömungsformteil (25) und dem Reaktionsrohr (4).

Dabei ist bevorzugt eine Heizung (20) so angebracht, daß gegebenenfalls mehrere Heizzonen zur Steuerung der Teilchengröße eingerichtet werden können. Bevorzugt sollten diese Heizzonen unabhängig regulierbar sein zum besseren Einstellen des Temperaturprofils entlang der Reaktorachse.

Die Düse (5) muß die Eigenschaft aufweisen, daß sie einmal aus den getrennten turbulenten Stromfäden der äußeren Wärmeaustauscher (2) einen homogenen, laminaren und rotationssymmetrischen Ringstrom erzeugt. Zweitens muß sie die Eigenschaft aufweisen, daß sie den turbulenten Stromfaden des mittleren Wärmetauschers (2a) laminarisiert und in den äußeren Ringstromfaden einfügt.

Fig. 2a zeigt einen möglichen Querschnitt durch den Gaseintragsteil.

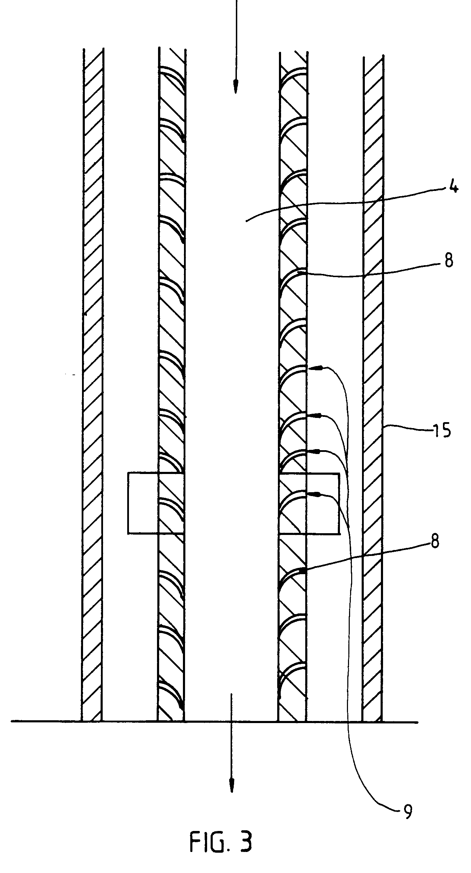

Um die energetisch stark bevorzugte heterogene Abscheidung dieser Stoffe an der heißen Reaktorwand zu unterbinden, wird diese durch Ringspalte (8) hindurch mit einem Inertgasstrom (9) ($N_2$, Ar oder He), der über den Coandaeffekt an der Reaktorwand anliegt, gespült. In Fig. 3 ist schematisch ein Teil des Reaktorrohres (4) dargestellt. In Fig. 3 wird der Inertgasstrom (9) zwischen der Reaktorwand und dem Reaktorhüllrohr (15) geführt. Die im Reaktor durch eine homogene Abscheidung aus der Gasphase entstandenen Keramikpulverpartikel verlassen diesen gemeinsam mit den gasförmigen Reaktionsprodukten (z.B. HCl) und den nicht umgesetzten Reaktanden und gelangen direkt in einen Rückblasfilter (10), in dem sie abgeschieden werden. Der Rückblasfilter (10) wird bei Temperaturen zwischen 300°C und 1 000°C betrieben, wodurch die Adsorption der Gase, insbesondere der nichtinerten Gase wie HCl, $NH_3$ und $TiCl_4$, an der sehr großen Oberfläche dieser Pulver auf einem niedrigen Niveau gehalten wird. Außerdem wird die Bildung von $NH_4Cl$ aus überschüssigem $NH_3$ (bei der Herstellung von Metallnitriden) und HCl unterbunden. In einem anschließenden Behälter (11) werden die Reste der adsorbierten Gase auf den Pulvern durch bevorzugt wechselweises Anlegen von Vakuum und Fluten mit verschiedenen Gasen bei 300°C bis 1 000°C weiter reduziert. Gute Wirkungen werden erzielt, wenn Gase wie $N_2$, Ar oder Kr eingesetzt werden. Besonders bevorzugt wird $SF_6$ eingesetzt.

In der erfindungsgemäßen Vorrichtung ist auch die Herstellung metastabiler Stoffsysteme und Partikel mit Kern/Mantel-Strukturen möglich. Dabei werden metastabile Stoffsysteme durch Einstellung sehr hoher Abkühlgeschwindigkeiten im unteren Teil des Reaktors erhalten.

Die Partikel mit Kern/Mantel-Struktur werden erhalten, indem im unteren Teil des Reaktors zusätzliche Reaktionsgase eingebracht werden.

Aus dem Evakuierbehälter (11) gelangen die Pulver in den Abkühlbehälter (12), bevor sie durch die Schleuse (13) in den Sammel- und Versandbehälter (14) gelangen. In dem Abkühlbehälter (12) können durch Einblasen verschiedener Gas/Dampfgemische die Partikeloberflächen in definierter Weise oberflächenmodifiziert werden.

Als Werkstoff für diejenigen Bauteile, die Temperaturen bis 2000°C und mehr ausgesetzt sind, wie Wärmetauscher (2) und (3), Düse (5), Reaktor (4) und Reaktorhüllrohr (15), kann bevorzugt beschichteter Graphit, insbesondere Feinkorngraphit, eingesetzt werden. Eine Beschichtung kann z.B. erforderlich sein, wenn die notwendige chemische Beständigkeit des Graphits gegen die eingesetzten Gase wie Metallchloride, HCl, $H_2$, $NH_3$, $N_2$ und $O_2$, bei den gegebenen Temperaturen nicht ausreichend ist oder wenn die Erosion bei höheren Strömungsgeschwindigkeiten (0,5-50 m/sec) ganz erheblich ist oder wenn die Gasdichtigkeit des Graphits dadurch erhöht werden kann oder wenn die Oberflächenrauhigkeit der Reaktorbauteile damit herabgesetzt werden kann.

Als Schichten können z.B. SiC, $B_4C$, TiN, TiC, $Al_2O_3$, $Ta_2O_3$ und Ni (nur bis 1200°C) eingesetzt werden. Auch Kombinationen verschiedener Schichten, z.B. mit "arteigener" Deckschicht, sind möglich. Diese Schichten können vorteilhaft mittels CVD, Plasmaspritzen und Elektrolyse (Ni) aufgebracht werden.

Für die Herstellung von Oxiden bieten sich für diese Teile oxidkeramische Werkstoffe an. Wenn nur niedrige Temperaturen notwendig sind, ist auch der Einsatz metallischer Werkstoffe möglich.

Zur Einstellung der Partikelgrößen der Keramik- und Metallpulver können gleichzeitig drei Vorgehensweisen eingesetzt werden:

- Einstellen eines bestimmten Verhältnisses der Reaktions- und Inertgase.
- Einstellen eines bestimmten Druckes.
- Einstellen eines bestimmten Temperatur-Verweilzeit-Profils längs der Reaktorachse.

Das Temperatur-Verweilzeit-Profil wird wie folgt eingestellt:

- Durch zwei oder mehrere Heizzonen vom Beginn der Gasvorwärmer (2) bis zum Ende des Rohrreaktors (4).
- Durch Variation des Reaktorquerschnitts entlang seiner Längsachse.
- Durch Variation der Gasdurchsätze und damit bei vorgegebenem Reaktorquerschnitt der Strömungsgeschwindigkeiten.
- Durch Variation des Reaktorquerschnitts entlang seiner Längsachse.

Insbesondere für die letztgenannte Möglichkeit ist es vorteilhaft, wenn das erfindungsgemäße Reaktionsrohr auswechselbar angebracht ist. Bevorzugt besteht das Reaktionsrohr aus mehreren Einzelsegmenten, wobei diese von unterschiedlicher innerer Geometrie sein können. Besonders bevorzugt sind die Einzelsegmente so angeordnet, daß eine stetige Querschnittsveränderung gewährleistet ist.

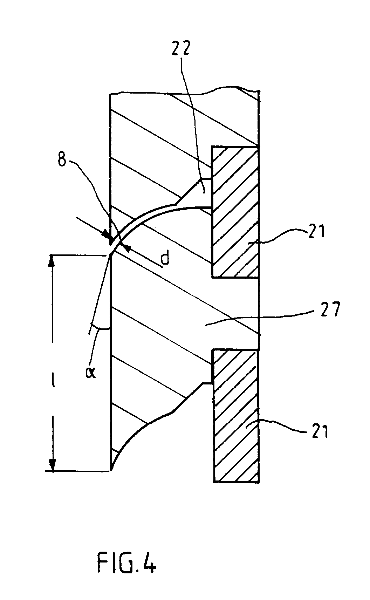

Eine besonders vorteilhafte Ausführungsform der erfinderischen Vorrichtung besteht darin, daß die Ringspalte an den Trenn- oder Verbindungsstellen der Einzelsegmente angeordnet sind, wie dies in Fig. 4 schematisch dargestellt ist.

Die Einzelsegmente sind dabei durch eine Distanz- und Zentriervorrichtung (21) miteinander verbunden.

Die Distanz- und Zentriervorrichtung (21) ist so mit Öffnungen versehen, daß das Reaktorwandspülgas in den Gasverteilungsraum (22) gelangen kann, wo sich zunächst eine gleichmäßige Ringströmung ausbildet, die dann durch die Ringspalte (8) in den Reaktor einfließt.

Die Dicke (d) der Ringspalte (8) muß nach den Strömungsgesetzen sehr eng toleriert sein. Um das Anlegen des Spülgases an die Reaktorwand sicherzustellen, sollte der Eintrittswinkel $\alpha$ nach den Strömungsgesetzen kleiner als 5° sein.

Die Distanz- und Zentriervorrichtung (21) kann sowohl ein separater Ring als auch Bestandteil bevorzugt jeweils eines der jeweils miteinander zu verbindenden Segmente sein.

Ein wesentlicher Vorteil der erfindungsgemäßen Variierbarkeit des Temperatur-Verweilzeit-Profils ist die Möglichkeit der Entkopplung der Keimbildungszone von der Keimwachstumszone. Damit ist es erfindungsgemäß möglich, für die Herstellung "gröberer" Pulver (z.B. der Bereich $\sim$ 0,1 $\mu$m bis $\sim$ 3 $\mu$m für TiN ) bei sehr niedriger Temperatur und kleiner Verweilzeit (d.h. kleiner Reaktorquerschnitt für eine bestimmte Länge) die Bildung von nur wenigen Keimen zuzulassen, die dann bei hoher Temperatur und großer Verweilzeit (großer Reaktorquerschnitt) zu "groben" Partikeln aufwachsen können. Ebenso ist es möglich, "feine" Pulver (z.B. für TiN der Bereich $\sim$ 3 nm bis $\sim$ 100 nm) herzustellen: in einem Bereich hoher Temperatur und relativ langer Verweilzeit wird die Bildung sehr vieler Keime erreicht, die im weiteren Reaktor bei niedrigen Temperaturen und kurzer Verweilzeit (kleiner Reaktorquerschnitt) nur noch gering aufwachsen. Die Einstellung sämtlicher Übergänge zwischen den hier qualitativ dargestellten Grenzfällen ist möglich.

Im Abkühlbehälter (12) ist durch Einblasen eines geeigneten Gas-/Dampf-Gemisches eine Passivierung der z.T. sehr luftempfindlichen bis pyrophoren Pulver möglich. Die Partikeloberflächen dieser Keramikpulver können sowohl mit einer Oxidschicht definierter Dicke als auch mit geeigneten organischen Verbindungen wie höhere Alkohole, Amine oder gleich Sinterhilfsmitteln wie Paraffine in einem inerten Trägergasstrom belegt werden. Die Beschichtung kann auch im Hinblick auf die Weiterverarbeitungsmöglichkeiten der Pulver durchgeführt werden.

Die Oxidschichten können z.B. mit einem definierten angefeuchteten Inertgas-Luft-Strom als auch mit einem Inertgas/$CO_2$-Strom (vorzugsweise für Carbide geeignet) aufgebracht werden.

Im folgenden wird die Erfindung weiter beispielhaft erläutert, ohne daß hierin eine Einschränkung zu sehen ist.

## Beispiel 1

TiN wurde gemäß der Reaktionsgleichung

$$TiCl_4 + NH_3 + 1/2 H_2 \rightarrow TiN + 4HCl$$

in einer Apparatur gemäß Fig. 1, 2 und 3 hergestellt, wobei ein Überschuß an $NH_3$ und $H_2$ eingehalten wurde.

Hierzu wurden 100 g/min $TiCl_4$ (flüssig, Siedepunkt 136°C) in den Verdampfer (1) dosiert, verdampft und gemeinsam mit 50 Nl/min $N_2$ auf 800°C erhitzt. Dieses Gasgemisch wurde in den Gasvorwärmer (2a) geleitet. Die Reaktionspartner $H_2$ (200 Nl/min) und $NH_3$ (95 Nl/min) wurden in den Gasvorwärmer (2) eingebracht. Die Reaktionspartner wurden getrennt voneinander auf eine Temperatur von etwa 1000°C vorerhitzt. Die Temperaturmessung erfolgte dabei mit einem W5Re-W26Re-Thermoelement (18) an der in Fig. 1 bezeichneten Stelle (1175°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. Die Düse (5) bestand dabei aus drei koaxial zueinander angeordneten Teildüsen. Aus der mittleren Teildüse trat ein Inertgasstrom (16) aus, der den Ort des Reaktionsbeginns, d.h. das Zusammentreffen der beiden Teilströme (6) und (7) von der Düse weg in das Reaktionsrohr verlegte. In dem inneren Stromfaden wurde mit dem Störkörper (17), mit einer kennzeichnenden Abmessung von 3,0 mm (in der Düsenlängsachse angeordnet) eine Karman'sche Wirbelstraße erzeugt. Das Reaktionsrohr hatte bei einer Gesamtlänge von 1100 mm am Düsenaustritt einen Innendurchmesser von 40 mm, 200mm unterhalb der Düse einen Innendurchmesser von 30 mm und am Ausgang 50 mm. Dabei wurde der Innenquerschnitt unter Beachtung der Strömungsgesetze stetig verändert. Das Reaktionsrohr (4) wurde aus 18 Segmenten (27) zusammengesetzt, wobei die Segmente jeweils durch einen Distanz- und Zentrierring (21) verbunden wurden. An diesen Stellen wurde jeweils ein Ringspalt (8) realisiert. Als Temperatur des Reaktionsrohres (4) wurde 1080°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 18 Ringspalte (8) hindurch mit 200 Nl/min $N_2$ gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch den 6. Ringspalt von unten mit einer zusätzlichen Gaseinleitvorrichtung 200 Nl/min $N_2$ in das Reaktionsrohr (4) eingeblasen. Das Produkt (TiN mit einer einheitlichen Partikelgröße von ~10 nm) wurde in dem Rückblasfilter (10) bei einer Temperatur von 600°C von den Gasen ($H_2$, $NH_3$, HCl, $N_2$) abgetrennt.

Die Wahl dieser Temperatur erfolgte einerseits, um die Bildung von $NH_4Cl$ zu verhindern (>350°C), und andererseits, um die Primärbelegung der sehr großen Partikeloberflächen (115 $m^2$/g) mit HCl auf einem niedrigen Niveau zu halten (~1,5 % Cl).

Das so hergestellte TiN wurde 40 min (d.h. 1300 g) im Rückblasfilter gesammelt, um dann in den Evakuierbehälter (11) überführt zu werden. In diesem Behälter wurden in einem Zeitraum von 35 min 8 Pump-Flutcyclen mit Endvakui von 0,1 mbar abs. durchlaufen. Der Behälter wurde jeweils mit Ar bis auf einen Druck von 1100 mbar abs. geflutet. Nach Ablauf von 35 min. wurde das so behandelte TiN-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das pyrophore TiN-Pulver zeigte bei einer spezifischen Oberfläche von 115 $m^2$/g, nach BET, gemessen nach der $N_2$-1-Punkt-Methode (DIN 66 131), entsprechend 10 nm, eine extrem enge Kornverteilung.

Eine REM-Aufnahme dieses TiN-Pulvers mit einer spezifischen Oberfläche von 115 $m^2$/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf. Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses TiN-Pulvers ergab einen Sauerstoffgehalt von 95 ppm und die Summe der nicht-oxidischen Verunreinigungen betrug 800 ppm.

Beispiel 2

TiN wurde gemäß der Reaktionsgleichung

$$TiCl_4 + NH_3 + 1/2\ H_2 \rightarrow TiN + 4HCl$$

in einer Apparatur gemäß Fig. 1, 2 und 3 hergestellt, wobei ein Überschuß an $NH_3$ und $H_2$ eingehalten wurde.

Hierzu wurden 100 g/min $TiCl_4$ (flüssig, Siedepunkt 136°C) in den Verdampfer (1) dosiert, verdampft und gemeinsam mit 50 Nl/min $N_2$ auf 950°C erhitzt. Dieses Gasgemisch wurde in den Gasvorwärmer (2a) geleitet. Die Reaktionspartner $H_2$ (200 Nl/min) und $NH_3$ (95 Nl/min) wurden in den Gasvorwärmer (2) eingebracht. Die Reaktionspartner wurden getrennt voneinander auf eine Temperatur von etwa 700°C vorerhitzt. Die Temperaturmessung erfolgte dabei mit einem W5Re-W26Re-Thermoelement (18) an der in Fig. 1 bezeichneten Stelle (850°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. Die Düse (5) bestand dabei aus drei koaxial zueinander angeordneten Teildüsen. Aus der mittleren Teildüse trat ein Inertgasstrom (16) aus, der den Ort des Reaktionsgebinns, d.h. das Zusammentreffen der beiden Teilströme (6) und (7) von der Düse weg in das Reaktionsrohr verlegte. In dem inneren Stromfaden wurde mit dem Störkörper (17), mit einer kennzeichnenden Abmessung von 4,0 mm (in der Düsenlängsachse angeordnet) eine Karman'sche Wirbelstraße erzeugt. Das Reaktionsrohr hatte bei einer Gesamtlänge von 1320 mm am Düsenaustritt einen Innendurchmesser von 25 mm, von 120 mm bis 180 mm unterhalb der Düse weitere der Innendurchmesser auf 48 mm auf; am Ausgang betrug er 65 mm. Dabei wurde der Innenquerschnitt unter Beachtung der Strömungsgesetze stetig verändert. Das Reaktionsrohr (4) wurde aus 22 Segmenten (27) zusammengesetzt, wobei die Segmente jeweils durch einen Distanz- und Zentrierring (21) verbunden wurden. An diesen Stellen wurde jeweils ein Ringspalt (8) realisiert.

Als Temperatur des Reaktionsrohres (4) wurde 1570°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 22 Ringspalte (8) hindurch mit 200 Nl/min $N_2$ gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch einen weiteren Ringspalt im 6. Segment von unten mit einer zusätzlichen Gaseinleitvorrichtung 200 Nl/min Ar in das Reaktionsrohr (4) eingeblasen. Das Produkt (TiN mit einer einheitlichen Partikelgröße von ~50 nm) wurde in dem Rückblasfilter (10) bei einer Temperatur von 600°C von den Gasen ($H_2$, $NH_3$, HCl, $N_2$) abgetrennt.

Die Wahl dieser Temperatur erfolgte einerseits, um die Bildung von $NH_4Cl$ zu verhindern (>350°C), und andererseits, um die Primärbelegung der sehr großen Partikeloberflächen (41,5 $m^2$/g) mit HCl auf einem niedrigen Niveau zu halten (~1 % Cl).

Das so hergestellte TiN wurde 40 min (d.h. 1300 g) im Rückblasfilter gesammelt, um dann in den Evakuierbehälter (11) überführt zu werden. In diesem Behälter wurden in einem Zeitraum von 35 min 8 Pump-Flutcyclen mit Endvakui von 0,1 mbar abs. durchlaufen. Der Behälter wurde jeweils mit Ar bis auf einen Druck von 1100 mbar abs. geflutet. Nach Ablauf von 35 min. wurde das so behandelte TiN-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das pyrophore TiN-Pulver zeigte bei einer spezifischen Oberfläche von 41,5 m$^2$/g, nach BET, gemessen nach der $N_2$-1-Punkt-Methode (DIN 66 131), entsprechend 50 nm, eine extrem enge Kornverteilung.

Eine REM-Aufnahme dieses TiN-Pulvers mit einer spezifischen Oberfläche von 41,5 m$^2$/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf. Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses TiN-Pulvers ergab einen Sauerstoffgehalt von 70 ppm und eine Summe der nicht-oxidischen Verunreinigungen von 820 ppm.

Beispiel 3

TiC wurde gemäß der Reaktionsgleichung

$$TiCl_4 + CH_4 \rightarrow TiC + 4HCl$$

in einer Apparatur gemäß Fig. 1, 2 und 3 hergestellt, wobei ein geringer Überschuß an $CH_4$ eingehalten und zusätzlich $H_2$ zugegeben wurde.

Hierzu wurden 90 g/min $TiCl_4$ (flüssig, Siedepunkt 136°C) in den Verdampfer (1a) dosiert, verdampft und gemeinsam mit 50 Nl/min Ar im Gasvorwärmer (2a) auf 1200°C erhitzt. Die Reaktionspartner $H_2$ (170 Nl/min) und $CH_4$ (25 Nl/min) wurden in den Gasvorwärmer (2) eingebracht. Die Reaktionspartner wurden getrennt voneinander auf eine Temperatur von etwa 1050°C vorerhitzt. Die Temperaturmessung erfolgte dabei mit einem W5Re-W26Re-Thermoelement (18) an der in Fig. 1 bezeichneten Stelle (1200°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. In diesem mittleren Stromfaden wurde mit dem Störkörper (17), mit einer kennzeichnenden Abmessung von 4,0 mm in der Düsenlängsachse angeordnet, eine Karman'sche Wirbelstraße erzeugt. Das Reaktionsrohr hatte bei einer Gesamtlänge von 1320 mm am Düsenaustritt einen Durchmesser von 25 mm, von 120 bis 180 mm unterhalb der Düse weitete der Durchmesser auf 48 mm auf; am Ausgang betrug er 65 mm. Dabei wurde der Innenquerschnitt unter Beachtung der Strömungsgesetze stetig verändert. Das Reaktionsrohr (4) wurde aus 22 Segmenten zusammengesetzt, wobei die Segmente jeweils durch einen Distanz- und Zentrierring verbunden wurden. An diesen Stellen wurde jeweils ein Ringspalt (8) realisiert.

Als Temperatur des Reaktionsrohres (4) wurde 1700°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 22 Ringspalte (8) hindurch mit 200 Nl/min Ar gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch einen weiteren Ringspalt im 6. Segment von unten mit einer zusätzlichen Gaseinleitvorrichtung 200 Nl/min Ar in das Reaktionsrohr (4) eingeblasen. Das Produkt (TiC mit einer einheitlichen Partikelgröße von ~50 nm) wurde in dem Rückblasfilter (10) bei einer Temperatur von 600°C von den Gasen ($H_2$, $CH_4$, HCl, Ar) abgetrennt.

Die Wahl dieser Temperatur erfolgte um, die Primärbelegung der sehr großen Partikeloberflächen (45,6 m$^2$/g) mit HCl auf einem niedrigen Niveau zu halten (~1 % Cl).

Das so hergestellte TiC wurde 40 min (d.h. 1300 g) im Rückblasfilter gesammelt, um dann in den Evakuierbehälter (11) überführt zu werden. In diesem Behälter wurden in einem Zeitraum von 35 min 8 Pump-Flutcyclen mit Endvakui von 0,1 mbar abs. durchlaufen. Der Behälter wurde jeweils mit Ar bis auf einen Druck von 1100 mbar abs. geflutet. Nach Ablauf von 35 min. wurde das so behandelte TiC-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das pyrophore TiC-Pulver zeigte bei einer spezifischen Oberfläche von 45,6 m$^2$/g, nach BET, gemessen nach der $N_2$-1-Punkt-Methode (DIN 66 131), entsprechend 10 nm, eine extrem enge Kornverteilung.

Eine REM-Aufnahme dieses TiC-Pulvers mit einer spezifischen Oberfläche von 45,6 m$^2$/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf. Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses TiC-Pulvers ergab einen Sauerstoffgehalt von 80 ppm und eine Summe der nicht-oxidischen Verunreinigungen von 890 ppm.

Beispiel 4

Ta wurde gemäß der Reaktionsgleichung

$$TaCl_5 + 2\ 1/2\ H_2 \rightarrow Ta + 5HCl$$

in einer Apparatur gemäß Fig. 1, 2 und 3 hergestellt, wobei ein Überschuß an H$_2$ eingehalten wurde.

Hierzu wurden 100 g/min TaCl$_5$ (fest, Siedepunkt 242°C) in den Verdampfer (1a) dosiert, verdampft und gemeinsam mit 50 Nl/min Ar im Gasvorwärmer (2a) auf 1300°C erhitzt. Die Reaktionspartner H$_2$ (200 Nl/min) wurde in den Gasvorwärmer (2) eingebracht. Die Reaktionspartner wurden getrennt voneinander auf eine Temperatur von etwa 1300°C vorerhitzt. Die Temperaturmessung erfolgte dabei mit einem W5Re-W26Re-Thermoelement (18) an der in Fig. 1 bezeichneten Stelle (1450°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. Die Düse (5) bestand dabei aus drei koaxial zueinander angeordneten Teildüsen. Aus der mittleren Teildüse trat ein Inertgasstrom (16) aus, der den Ort des Reaktionsbeginns, d.h. das Zusammentreffen der beiden Teilströme (6) und (7) von der Düse weg in das Reaktionsrohr verlegte. In dem inneren Stromfaden wurde mit dem Störkörper (17), mit einer kennzeichnenden Abmessung von 3,0 mm (in der Düsenlängsachse angeordnet) eine Karman'sche Wirbelstraße erzeugt. Der Rohrreaktor hatte bei einer Gesamtlänge von 1100 mm am Düsenaustritt einen Innendurchmesser von 40 mm, 200 mm unterhalb der Düse einen Innendurchmesser von 30 mm und am Ausgang 50 mm. Dabei wurde der Innenquerschnitt unter Beachtung der Strömungsgesetze stetig verändert. Das Reaktionsrohr (4) wurde aus 18 Segmenten (27) zusammengesetzt, wobei die Segmente jeweils durch einen Distanz- und Zentrierring (21) verbunden wurden. An diesen Stellen wurde jeweils ein Ringspalt (8) realisiert. Als Temperatur des Reaktionsrohres (4) wurde 1230°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 18 Ringspalte (8) hindurch mit 200 Nl/min Ar gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des HCl-Partialdruckes wurde durch den 6. Ringspalt von unten mit einer zusätzlichen Gaseinleitvorrichtung 200 Nl/min Ar in das Reaktionsrohr (4) eingeblasen. Das Produkt (Ta mit einer einheitlichen Partikelgröße von ~25 nm) wurde in dem Rückblasfilter (10) bei einer Temperatur von 600°C von den Gasen (H$_2$, HCl, Ar) abgetrennt.

Die Wahl dieser Temperatur erfolgte, um die Primärbelegung der sehr großen Partikeloberflächen (18 m$^2$/g) mit HCl auf einem niedrigen Niveau zu halten (~0,8 % Cl).

Das so hergestellte Ta wurde 40 min (d.h. 2000 g) im Rückblasfilter gesammelt, um dann in den Evakuierbehälter (11) überführt zu werden. In diesem Behälter wurden in einem Zeitraum von 35 min 8 Pump-Flutcyclen mit Endvakui von 0,1 mbar abs. durchlaufen. Der Behälter wurde jeweils mit Ar bis auf einen Druck von 1100 mbar abs. geflutet. Nach Ablauf von 35 min. wurde das so behandelte Ta-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das pyrophore Ta-Pulver zeigte bei einer spezifischen Oberfläche von 17 m$^2$/g, nach BET, gemessen nach der N$_2$-1-Punkt-Methode (DIN 66 131), entsprechend 25 nm, eine extrem enge Kornverteilung.

Eine REM-Aufnahme dieses Ta-Pulvers mit einer spezifischen Oberfläche von 25 m$^2$/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf. Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses Ta-Pulvers ergab einen Sauerstoffgehalt von 70 ppm und die Summe der nicht-oxidischen Verunreinigungen betrug 430 ppm.

Beispiel 5

Nb$_2$O$_5$ wurde gemäß der Reaktionsgleichung

$$2 \ NbCl_5 + 2 \ 1/2 \ O_2 \rightarrow Nb_2O_5 + 5Cl_2$$

in einer Apparatur gemäß Fig. 1, 2 und 3 hergestellt. Als Sauerstoffträger wurde Luft im Überschuß eingesetzt.

Hierzu wurden 100 g/min $NbCl_5$ (fest, Siedepunkt 254°C) in den Verdampfer (1a) dosiert, verdampft und gemeinsam mit 50 Nl/min $N_2$ im Gasvorwärmer (2a) auf 1250°C erhitzt. Die Luft (400 Nl/min) wurden in den Gasvorwärmer (2) eingebracht. Die Reaktionspartner wurden getrennt voneinander auf eine Temperatur von etwa 1200°C vorerhitzt. Die Temperaturmessung erfolgte dabei mit einem W5Re-W26Re-Thermoelement (18) an der in Fig. 1 bezeichneten Stelle (1450°C). Vor Eintritt in das Reaktionsrohr (4) wurden die aus den Gasvorwärmern (2) austretenden turbulenten Einzelstromfäden in dem äußeren Teil der Düse (5) zu einem homogenen, rotationssymmetrischen und laminaren Ringstrom geformt. Der aus dem Gasvorwärmer (2a) austretende Gasstrom wurde ebenfalls in der Düse (5) laminarisiert und in die Ringströmung eingebracht. Die Düse (5) bestand dabei aus drei koaxial zueinander angeordneten Teildüsen. Aus der mittleren Teildüse trat ein Inertgasstrom (16) aus, der den Ort des Reaktionsbeginns, d.h. das Zusammentreffen der beiden Teilströme (6) und (7) von der Düse weg in das Reaktionsrohr verlegte. In dem inneren Stromfaden wurde mit dem Störkörper (17), mit einer kennzeichnenden Abmessung von 4,0 mm (in der Düsenlängsachse angeordnet), eine Karman'sche Wirbelstraße erzeugt. Das Reaktionsrohr hatte bei einer Gesamtlänge von 1100 mm am Düsenaustritt einen Innendurchmesser von 45 mm, 200 mm unterhalb der Düse einen Innendurchmesser von 30 mm. Nach einer Aufweitung auf 90 mm (bei 290 mm unterhalb der Düse) betrug der Innendurchmesser am Ausgang 105 mm.

Dabei wurde der Innendurchmesser unter Beachtung der Strömungsgesetzte stetig verändert. Das Reaktiosrohr (4) wurde aus 18 Segmenten (27) zusammengesetzt, wobei die Segmente jeweils durch einen Distanz- und Zentrierring (21) verbunden wurden. An diesen Stellen wurde jeweils ein Ringspalt (8) realisiert.

Die Düse (5), das Reaktionsrohr (4) und der Wärmetauscher (2) wurden aus Oxidkeramik gefertigt. Der Wärmeaustauscher (2a) bestand aus beschichtetem Graphit. Die große Aufweitung des Reaktorquerschnittes ist notwendig, um mit großer Verweilzeit auch das Nebenprodukt $NbO_2Cl$ in $Nb_2O_5$ zu überführen.

Als Temperatur des Reaktionsrohres (4) wurde 1300°C, gemessen an der Reaktoraußenwand, 400 mm unterhalb der Düse, mit dem W5Re-W26Re-Thermoelement (19), eingestellt. Der Druck im Reaktionsrohr (4) war mit dem Druck im Rückblasfilter (10) praktisch identisch. Dieser betrug 250 mbar Überdruck. Die Reaktorwand wurde durch 18 Ringspalte (8) hindurch mit 200 Nl/min $N_2$ gespült. Unterbleibt die Spülung der Reaktorwand mit einem Inertgas, können Anwachsungen entstehen, die zum Teil sehr schnell bis zum Reaktorverschluß und damit zum Abbruch des Prozesses führen können; in jedem Fall wird aber, wegen der sich verändernden Reaktorgeometrie, ein sich ebenfalls veränderndes Produkt erzeugt. Zur Verringerung des $Cl_2$-Partialdruckes wurde durch den 6. Ringspalt von unten mit einer zusätzlichen Gaseinleitvorrichtung 200 Nl/min $N_2$ in das Reaktionsrohr (4) eingeblasen. Das Produkt ($Nb_2O_5$ mit einer einheitlichen Partikelgröße von ~45 nm) wurde in dem Rückblasfilter (10) bei einer Temperatur von 600°C von den Gasen ($Cl_2$, $N_2$) abgetrennt.

Die Wahl dieser Temperatur erfolgte, um die Primärbelegung der sehr großen Partikeloberflächen (42 $m^2$/g) mit $Cl_2$ auf einem niedrigen Niveau zu halten.

Das so hergestellte $Nb_2O_5$ wurde 40 min (d.h. 1950 g) im Rückblasfilter gesammelt, um dann in den Evakuierbehälter (11) überführt zu werden. In diesem Behälter wurden in einem Zeitraum von 35 min 8 Pump-Flutcyclen mit Endvakui von 0,1 mbar abs. durchlaufen. Der Behälter wurde jeweils mit Ar bis auf einen Druck von 1100 mbar abs. geflutet. Nach Ablauf von 35 min. wurde das so behandelte $Nb_2O_5$-Pulver in den Abkühlbehälter (12) überführt. In diesem Behälter ist durch Einblasen verschiedener Gas/Dampfgemische auch ein gezieltes Oberflächentailoring möglich. Nach Abkühlen des Pulvers auf <50°C wurde dieses ohne Kontakt mit der Außenluft durch die Schleuse (13) in den Sammel- und Versandbehälter überführt.

Das $Nb_2O_5$-Pulver zeigte bei einer spezifischen Oberfläche von 42 $m^2$/g, nach BET, gemessen nach der $N_2$-1-Punkt-Methode (DIN 66 131), entsprechend 45 nm, eine extrem enge Kornverteilung.

Eine REM-Aufnahme dieses $Nb_2O_5$-Pulvers mit einer spezifischen Oberfläche von 42 $m^2$/g zeigte die sehr enge Verteilung der Partikelabmessungen und die Überkornfreiheit. Weniger als 1 % der Einzelpartikel weisen danach eine Abweichung von mehr als 10 % und keine Einzelpartikel eine Abweichung von mehr als 40 % von der mittleren Korngröße auf. Nach dem derzeitigen Stand der Meßtechnik lassen sich verläßliche Aussagen über eine Partikelgrößenverteilung solch extrem feiner Pulver nur über bilderzeugende Methoden (z.B. REM, TEM) erhalten.

Die Analyse dieses $Nb_2O_5$-Pulvers ergab als Summe der metallischen Verunreinigungen 700 ppm.

**Patentansprüche**

1. Gasphasenreaktor zur Herstellung feinteiliger Metall- und/oder Keramikpulver, bestehend aus einer Gasvorwärmeinrichtung (23), einem Gaseintragsteil (24), einem Strömungsformteil (25), einem Reaktionsrohr (4) und einer Produktaustragsvorrichtung (26), wobei die Gasvorwärmeinrichtung (23) aus mindestens zwei getrennten Gaserhitzern (20) besteht und das Strömungsformteil (25) aus mindestens einer Düse (5) besteht, die mindestens zwei koaxiale, laminare und rotationssymmetrische Stromfäden formt.

2. Gasphasenreaktor gemäß Anspruch 1, dadurch gekennzeichnet, daß einem oder mehreren der Gaserhitzer ein Verdampfer vorgeschaltet ist.

3. Gasphasenreaktor gemäß Anspruch 2, dadurch gekennzeichnet, daß der oder die Verdampfer in die Gasvorwärmeinrichtung integriert ist (sind).

4. Gasphasenreaktor gemäß einem oder mehreren der Ansprüche 1 bis 3, dadurch gekennzeichnet, daß das Strömungsformteil aus mindestens zwei Reaktionsgas-Düsen besteht.

5. Gasphasenreaktor gemäß Anspruch 4, dadurch gekennzeichnet, daß die Reaktionsgas-Düsen koaxial angeordnet sind.

6. Gasphasenreaktor gemäß einem der Ansprüche 4 oder 5, dadurch gekennzeichnet, daß zwischen den Reaktions-Düsen mindestens eine Inertgas-Düse angeordnet ist.

7. Gasphasenreaktor gemäß Anspruch 6, dadurch gekennzeichnet, daß die Inertgasdüse(n) koaxial zu den Reaktionsgas-Düsen angebracht ist (sind).

8. Gasphasenreaktor gemäß einem oder mehreren der Ansprüche 1 bis 7, dadurch gekennzeichnet, daß in dem Strömungsformteil ein Störkörper zur Erzeugung einer Karman'schen Wirbelstraße angeordnet ist.

9. Gasphasenreaktor gemäß Anspruch 8, dadurch gekennzeichnet, daß der Störkörper in der Längsachse der mittleren der koaxialen Düsen gemäß einem oder mehreren der Ansprüche 5 bis 7 angebracht ist.

10. Gasphasenreaktor gemäß einem oder mehreren der Ansprüche 1 bis 9, dadurch gekennzeichnet, daß im Reaktionsrohr eine oder mehrere Gaseintragseinrichtungen angebracht sind.

11. Gasphasenreaktor gemäß Anspruch 10, dadurch gekennzeichnet, daß die Gaseintragseinrichtungen Ringspalte sind.

12. Gasphasenreaktor gemäß einem oder mehreren der Ansprüche 1 bis 11, dadurch gekennzeichnet, daß das Reaktionsrohr auswechselbar angeordnet ist.

13. Gasphasenreaktor gemäß Anspruch 12, dadurch gekennzeichnet, daß das Reaktionsrohr aus mehreren Einzelsegmenten besteht.

14. Gasphasenreaktor gemäß Anspruch 13, dadurch gekennzeichnet, daß die Einzelsegmente von unterschiedlicher innerer Geometrie sind.

15. Gasphasenreaktor gemäß Anspruch 14, dadurch gekennzeichnet, daß die Einzelsegmente so angeordnet sind, daß eine stetige Querschnittsveränderung gewährleistet ist.

16. Gasphasenreaktor gemäß einem der Ansprüche 11 bis 15, dadurch gekennzeichnet, daß die Ringspalte an den Trenn- oder Verbindungsstellen der Einzelsegmente gemäß einem oder mehreren der Ansprüche 13 bis 15 angeordnet sind.

17. Gasphasenreaktor, gemäß einem der Ansprüche 11 bis 16, dadurch gekennzeichnet, daß die Innenwand Längsrillen mit Seitenabständen und Tiefen in der Größenordnung von 0,1 mm aufweist.

18. Gasphasenreaktor, gemäß einem der Ansprüche 10 bis 11 und 17, dadurch gekennzeichnet, daß auch die Ringspalte Längsrillen aufweisen.

**Claims**

1. A gas phase reactor for producing finely-divided metal powder and/or ceramic powder, comprising a gas preheater (23), a gas feed (24), a flow-shaping part (25), a reaction tube (4) and a product discharge device (26), wherein the gas preheater (23) comprises at least two separate gas heaters (20) and the flow-shaping part (25) comprises at least one nozzle (5) which forms at least two coaxial, laminar and rotationally symmetrical stream filaments.

2. The gas phase reactor according to claim 1, characterised in that an evaporator is connected upstream of one or more of the gas heaters.

3. The gas phase reactor according to claim 2, characterised in that the evaporator(s) is (are) integrated into the gas preheater.

4. The gas phase reactor according to one or more of claims 1 to 3, characterised in that the flow-shaping part comprises at least two reaction gas nozzles.

5. The gas phase reactor according to claim 4, characterised in that the reaction gas nozzles are disposed coaxially.

6. The gas phase reactor according to either of claims 4 or 5, characterised in that at least one inert gas nozzle is disposed between the reaction nozzles.

7. The gas phase reactor according to claim 6, characterised in that the inert gas nozzle(s) is (are) disposed coaxially to the reaction gas nozzles.

8. The gas phase reactor according to one or more of claims 1 to 7, characterised in that an obstacle for producing a Karman vortex street is disposed in the flow-shaping part.

9. The gas phase reactor according to claim 8, characterised in that the obstacle is disposed in the longitudinal axis of the central coaxial nozzle according to one or more of claims 5 to 7.

10. The gas phase reactor according to one or more of claims 1 to 9, characterised in that one or more gas feed devices are disposed within the reactor tube.

11. The gas phase reactor according to claim 10, characterised in that the gas feed devices are annular gaps.

12. The gas phase reactor according to one or more of claims 1 to 11, characterised in that the reaction tube is arranged so as to be interchangeable.

13. The gas phase reactor according to claim 12, characterised in that the reaction tube comprises several individual segments.

14. The gas phase reactor according to claim 13, characterised in that the individual segments are of differing internal geometry.

15. The gas phase reactor according to claim 14, characterised in that the individual segments are disposed so as to ensure a continuous change in transverse section.

16. The gas phase reactor according to one of claims 11 to 15, characterised in that the annular gaps at the separating or connecting positions of the individual segments are disposed according to one or more of claims 13 to 15.

17. The gas phase reactor according to one of claims 11 to 16, characterised in that the inner wall possesses longitudinal grooves having lateral clearances and depressions of the order of magnitude of 0.1 mm.

18. The gas phase reactor according to claims 10 to 11 and 17, characterised in that the annular gaps also possess longitudinal grooves.

## Revendications

1. Réacteur à phase gazeuse pour produire des poudres à particules fines en métal ou en céramique, comprenant un dispositif de préchauffage de gaz (23), une partie d'entrée de gaz (24), une partie d'écoulement en forme (25), un tube de réaction (4) et un dispositif de sortie de produits (26), dans lequel le dispositif de préchauffage de gaz (23) est constitué par au moins deux réchauffeurs de gaz séparés (20) et en ce que la partie d'écoulement en forme (25) est constituée par au moins une buse (5), qui forme au moins deux jets d'écoulement coaxiaux, laminaires et à symétrie de résolution.

2. Réacteur à phase gazeuse selon la revendication 1, caractérisé en ce qu'un vaporisateur est raccordé en amont de l'un ou de plusieurs des réchauffeurs de gaz.

3. Réacteur à phase gazeuse selon la revendication 2, caractérisé en ce que le ou les vaporisateur(s) est (sont) intégrés dans le dispositif de préchauffage de gaz.

4. Réacteur à phase gazeuse selon l'une ou plusieurs des revendications 1 à 3, caractérisé en ce que la partie d'écoulement en forme est constituée par au moins deux buses de gaz de réaction.

5. Réacteur à phase gazeuse selon la revendication 4, caractérisé en ce que les buses de gaz de réaction sont agencées de façon coaxiale.

6. Réacteur à phase gazeuse selon l'une ou l'autre des revendications 4 et 5, caractérisé en ce qu'au moins une buse de gaz inerte est agencée entre les buses de réaction.

7. Réacteur à phase gazeuse selon la revendication 6, caractérisé en ce que la ou les buses de gaz inerte sont montées de façon coaxiale aux buses de gaz de réaction.

8. Réacteur à phase gazeuse selon l'une ou plusieurs des revendications 1 à 7, caractérisé en ce qu'il est prévu un corps de perturbation agencé dans la partie d'écoulement en forme pour produire un trajet à tourbillons de Karman.

9. Réacteur à phase gazeuse selon la revendication 8, caractérisé en ce que le corps de perturbation est monté dans l'axe longitudinal de la buse centrale parmi les buses coaxiales selon l'une ou plusieurs des revendications 5 à 7.

10. Réacteur à phase gazeuse selon l'une ou plusieurs des revendications 1 à 9, caractérisé en ce qu'il est prévu dans le tube de réaction un ou plusieurs dispositifs d'entrée de gaz.

11. Réacteur à phase gazeuse selon la revendication 10, caractérisé en ce que les dispositifs d'entrée de gaz sont des fentes annulaires.

12. Réacteur à phase gazeuse selon l'une ou plusieurs des revendications 1 à 11, caractérisé en ce que le tube de réaction est agencé de manière interchangeable.

13. Réacteur à phase gazeuse selon la revendication 12, caractérisé en ce que le tube de réaction est constitué de plusieurs segments individuels.

14. Réacteur à phase gazeuse selon la revendication 13, caractérisé en ce que les segments individuels présentent une géométrie intérieure différente.

15. Réacteur à phase gazeuse selon la revendication 14, caractérisé en ce que les segments individuels sont agencés de telle façon qu'on assure une modification constante de la section transversale.

16. Réacteur à phase gazeuse selon l'une quelconque des revendications 11 à 15, caractérisé en ce que les fentes annulaires sont ménagées au niveau des emplacements de séparation ou de liaison des segments individuels selon l'une ou plusieurs des revendications 13 à 15.

17. Réacteur à phase gazeuse selon l'une quelconque des revendications 11 à 16, caractérisé en ce que la paroi intérieure présente des rainures longitudinales qui ont des écartements latéraux et des profondeurs de l'ordre de grandeur de 0,1 mm.

18. Réacteur à phase gazeuse selon l'une quelconque des revendications 10, 11 et 17, caractérisé en ce que les fentes annulaires présentent également des rainures longitudinales.

FIG. 1

FIG. 2

FIG. 2a

FIG. 3

FIG. 4